# EUROPEAN PATENT APPLICATION

(11) **EP 4 112 386 A1**
(43) Date of publication of application: **04.01.2023**
(21) Application number: 22180580.7
(22) Date of filing: 22.06.2022
(51) Int. Cl.: B60R 9/10, B60P 3/079, B62H 3/02, E05C 19/18

(54) **BICYCLE CROSS BAR ADAPTOR**

(30) Priority: 30.06.2021 TW 110207634 U
(71) Applicant: King Rack Industrial Co., Ltd., Taichung City (TW)
(72) Inventor: WANG, Chiu-Kuei, Taichung City (TW)
(74) Representative: Cabinet Chaillot

(57) **Abstract**

A bicycle cross bar adaptor includes a first tube, a second tube and a control unit. The control unit is located between the first and second tubes. Each of the first and second tubes has a hook connected thereto. The second tube has a groove defined axially in an outer surface thereof. The control unit includes a collar in which the first and second tubes are slidably inserted with each other. A hole is defined through the wall of the collar and a block is located in the hole. A block is located in the hole and removably engaged with the groove. A lever is pivotably connected to the collar and has a cam portion to perform as a quick-release to position the block in the groove or away from the groove to adjust the second tube relative to the first sleeve.

## Description

### BACKGROUND OF THE INVENTION

### 1. Fields of the invention

The present invention relates to a bicycle cross bar adaptor, and more particularly, to a retractable bicycle cross bar adaptor.

### 2. Descriptions of Related Art

The bicycle cross bar adaptor is used to be installed between the seat tube and the head tube of a bicycle so that when the bicycle is carried by a bicycle rack on a vehicle, the bicycle rack supports or clamps the cross bar adaptor.

Taiwanese Utility Model No. M559826 discloses a retractable bicycle cross bar adaptor that includes a bar, a movable unit and a securing unit. The bar has multiple notches, and the movable unit is slidably connected to the bar. The movable unit includes a base, a slide and a stop, wherein the slide is slidably connected to the base so as to be in contact with the stop optionally. The stop is engaged one of the notches of the bar. The securing unit is connected to the movable unit and is connected to a bicycle.

Although the length of the retractable bicycle cross bar adaptor can be adjusted, it involves too many pars and the parts have complicated shapes. The slide is biased by two springs which moves the slide back and forth when the user pushes the base to allow the stop to move, such that the bar can be extended or retracted to adjust the length of the cross bar adaptor. It is noted that the movable unit and the securing unit includes many parts that have different sizes and shapes, some of the parts are tiny, therefore the manufacturing cost of the retractable bicycle cross bar adaptor is high and cannot compete with other similar products in the market.

The present invention intends to provide a retractable bicycle cross bar adaptor to eliminate the shortcomings mentioned above.

### SUMMARY OF THE INVENTION

The present invention relates to a retractable bicycle cross bar adaptor and comprises a bar having a first tube, a second tube and a control unit. The first tube has a first end and a second end. The second tube has a first end and a second end. The control unit is located between the first tube and the second tube. A first hook is connected to the second end of the first tube and a second hook is connected to the second end of the second tube. The first tube has a non-circular cross section, and includes a first connection end formed to the first end of the first tube. A cross section of the second tube is matched with the non-circular cross section of the first tube. The second tube has a second connection end formed to the first end of the second tube. The second connection end is slidably inserted into the first connection end. The second tube includes a groove defined axially in the outside of the second tube.

The control unit includes a collar, a lever and a block. The collar has a passage defined axially therethrough. An inner diameter of the passage is larger than that of the first tube. The first connection end is inserted into the first end of the passage, and the second connection end is inserted into the second end of the passage and slidably inserted into the first connection end. A space is formed in the collar and located between the outside of the second connection end and the inner periphery of the passage. A hole is defined through the wall of the collar and communicates with the space. Two lugs extend from the outer surface of the collar. The hole is located between the two lugs.

The lever includes an eccentric end formed to one end thereof, and the eccentric end pivotably connected between the two lugs and includes a cam portion. The block is located in the space and includes a convex engaging face which is removably engaged with the groove. The block includes a push face that is located opposite to the convex engaging face.

Preferably, the first tube includes a ridge extending axially and inward from the inner periphery of the first connection end. The ridge is located corresponding to the groove. The collar includes a first flange extending inward from the second end of the passage. A protrusion extends from the inner periphery of the first flange and located corresponding to the groove so as to guide the second tube to move linearly. The convex engaging face of the block is removably engaged with the groove.

Preferably, an end cap is connected to the second connection end.

Preferably, a pin extends through the two lugs and pivotably connects the eccentric end between the two lugs.

Preferably, the block is an elongate block and made of rubber. The convex engaging face is shaped to be matched with a shape of the groove. The push face is a flat face.

Preferably, a second flange extends inward from the inner periphery of the passage. The first connection end of the first tube contacts the second flange. The space is located between the first and second flanges.

The eccentric portion of the lever includes the cam portion so that the lever performs as a quick-release, and the lever is pivoted about the pin to control the block to be engaged with or removed from the groove such that the second tube is slidably moved relative to the first tube to adjust the length of the cross bar adaptor. The operation is simple and easy, and the block is made of rubber to provide sufficient friction with the groove to secure the adjusted length of the cross bar adaptor.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the retractable cross bar adaptor of the present invention;
Fig. 2 is another perspective view to show the retractable cross bar adaptor of the present invention;
Fig. 3 is an exploded view of the retractable cross bar adaptor of the present invention;
Fig. 4 is a cross sectional view to show that the lever is pivoted to contact the block against the groove;
Fig. 5 is a cross sectional view to show that the lever is pivoted to an opposite direction to remove the block against the groove;
Fig. 6 is an end cross sectional view of the status in Fig. 4, and
Fig. 7 shows that the retractable cross bar adaptor of the present invention is used to a bicycle.

### DETAILED DESCRIPTION OF THE PREFERRED EMBODIMENT

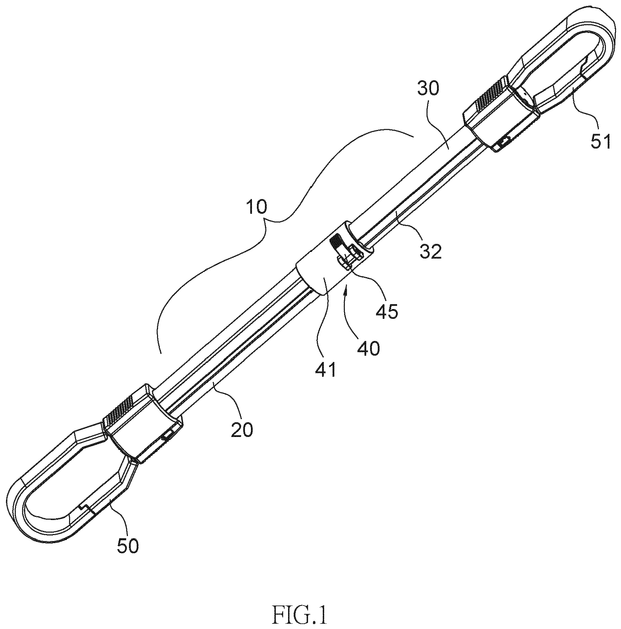

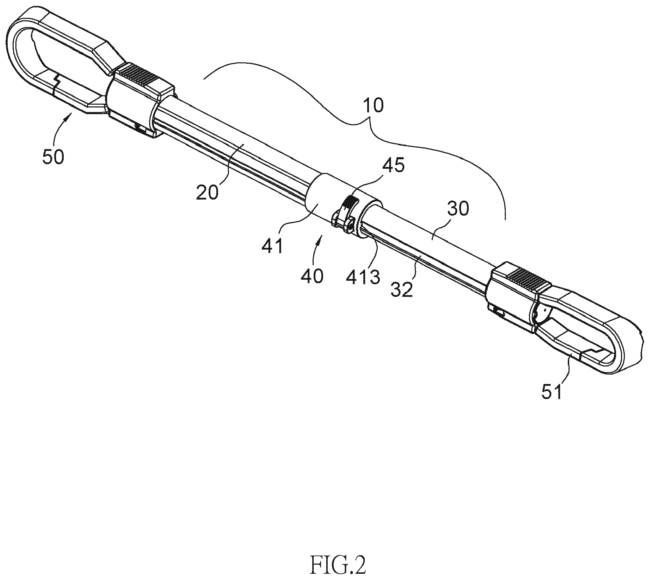

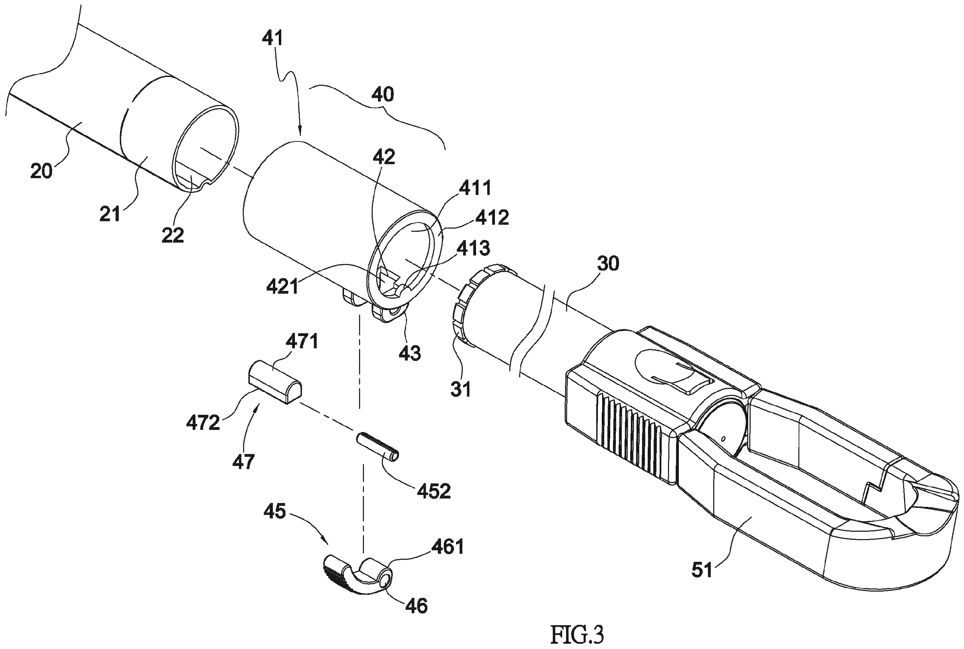

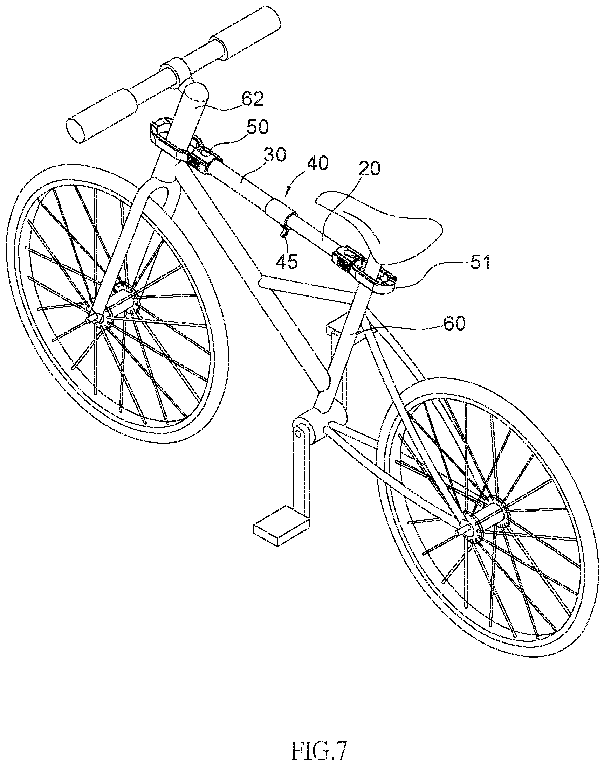

Referring to Figs. 1 to 3, the retractable cross bar adaptor of the present invention comprises a bar 10 having a first tube 20, a second tube 30 and a control unit 40. The first tube 20 has a first end and a second end, and the second tube 30 has a first end and a second end. The control unit 40 is located between the first tube 20 and the second tube 30. A first hook 50 is connected to the second end of the first tube 20, and a second hook 51 connected to the second end of the second tube 30. As shown in Fig. 7, the first and second hooks 50, 51 are respectively hooked to the head tube 62 and the seat tube 60 of a bicycle to perform as a top tube of the bicycle.

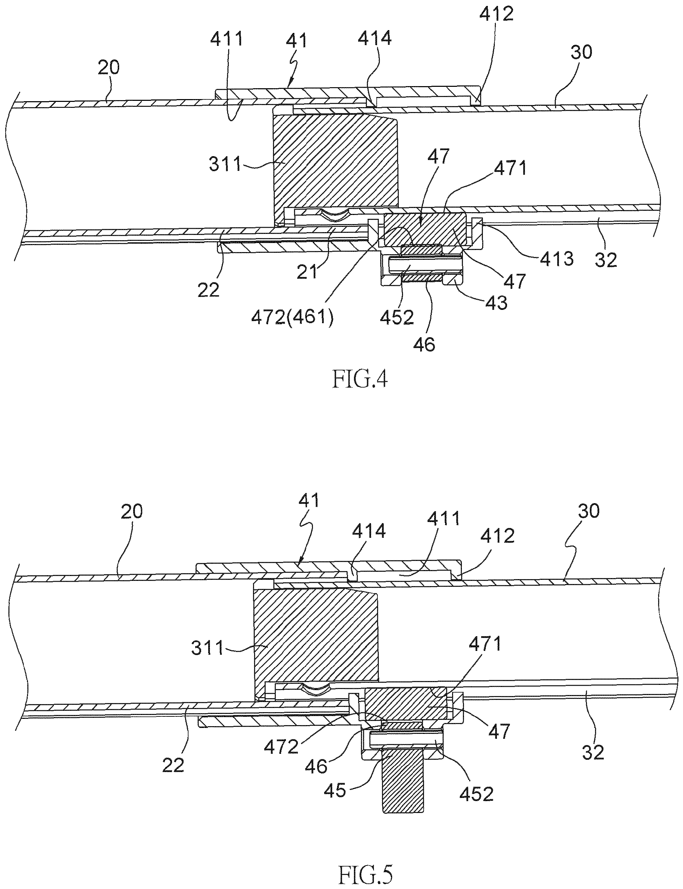

The first tube 20 has a non-circular cross section, and a first connection end 21 is formed to the first end of the first tube 20. The cross section of the second tube 30 is matched with the non-circular cross section of the first tube 20. A second connection end 31 is formed to the first end of the second tube 30. The second connection end 31 is slidably inserted into the first connection end 21. An end cap 311 is connected to the second connection end 31 to prevent dust from entering into the second tube 30 and to reinforce the structural strength as shown in Fig. 4. The second tube 30 includes a groove 32 defined axially in the outside of the second tube 30.

The control unit 40 includes a collar 41, a lever 45 and a block 47. The collar 41 has a passage 411 defined axially therethrough. The inner diameter of the passage 411 is larger than that of the first tube 20. The first connection end 21 is inserted into the first end of the passage 411, and the second connection end 31 is inserted into the second end of the passage 411 and slidably inserted into the first connection end 21. A space 42 is formed in the collar 41 and located between the outside of the second connection end 31 and the inner periphery of the passage 411. A hole 421 is defined through the wall of the collar 41 and communicates with the space 42. Two lugs 43 extend from the outer surface of the collar 41. The hole 421 is located between the two lugs 43.

The first tube 20 includes a ridge 22 extending axially and inward from the inner periphery of the first connection end 21. The ridge 22 is located corresponding to the groove 32. The collar 41 includes a first flange 412 extending inward from the second end of the passage 411. A protrusion 413 extends from the inner periphery of the first flange 412 and located corresponding to the groove 32 so as to guide the second tube 30 to move linearly along the groove 32. As shown in Fig. 4, a second flange 414 extends inward from the inner periphery of the passage 411. The first connection end 21 of the first tube 20 contacts the second flange 414. The space 42 is located between the first and second flanges 412, 414.

The lever 45 including an eccentric end 46 formed to one end thereof. A pin 452 extends through the two lugs 43 and pivotably connects the eccentric end 46 between the two lugs 43. The eccentric end 46 includes a cam portion 461 so as to perform as a quick release lever. The block 47 is located in the space 42 and includes a convex engaging face 471 which is removably engaged with the groove 32. The block 47 including a push face 472 that is located opposite to the convex engaging face 471. Specifically, the block 47 is an elongate block and made of rubber. The convex engaging face 471 is shaped to be matched with a shape of the groove 32, and the push face 472 is a flat face.

As shown in Fig. 5, when the lever 45 is pivoted in one direction, such that the long-axis of the cam portion 461 is located away from the groove 32, there is a gap formed between the convex engaging face 471 and the groove 32. Therefore, the second tube 30 is movably relative to the first tube 20 to adjust the length of the cross bar adaptor. The first and second hooks 50, 51 then respectively hook to the head tube 62 and the seat tube 60 of the bicycle as shown in Fig. 7 to perform as a top tube of the bicycle.

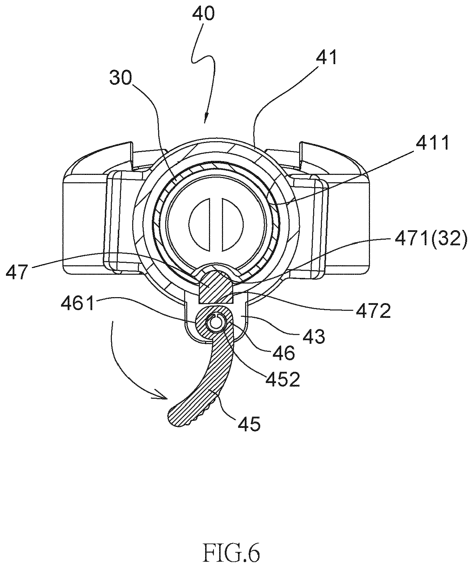

When pivoting the lever 45 in an opposite direction, the cam portion 461 pushes the push face 472 of the block 47 to tightly engage the convex engaging face 471 with the groove 32 as shown in Figs. 4 and 6, so that the second tube 30 cannot be moved relative to the first tube 20, and the length of the cross bar adaptor is set.

While we have shown and described the embodiment in accordance with the present invention, it should be clear to those skilled in the art that further embodiments may be made without departing from the scope of the present invention.

## Claims

1. A retractable bicycle cross bar adaptor, comprising:
a bar (10) having a first tube (20), a second tube (30) and a control unit (40), the first tube (20) having a first end and a second end, the second tube (30) having a first end and a second end, the control unit (40) located between the first tube (20) and the second tube (30), a first hook (50) connected to the second end of the first tube (20), a second hook (51) connected to the second end of the second tube (30);
the first tube (20) having a non-circular cross section, a first connection end (21) formed to the first end of the first tube (20), a cross section of the second tube (30) being matched with the non-circular cross section of the first tube (20), a second connection end (31) formed to the first end of the second tube (30), the second connection end (31) slidably inserted into the first connection end (21), the second tube (30) including a groove (32) defined axially in an outside of the second tube (30);
the control unit (40) including a collar (41), a lever (45) and a block (47), the collar (41) having a passage (411) defined axially therethrough, an inner diameter of the passage (411) being larger than that of the first tube (20), the first connection end (21) inserted into a first end of the passage (411), the second connection end (31) inserted into a second end of the passage (411) and slidably inserted into the first connection end (21), a space (42) formed in the collar (41) and located between an outside of the second connection end (31) and an inner periphery of the passage (411), a hole (421) defined through a wall of the collar (41) and communicating with the space (42), two lugs (43) extending from an outer surface of the collar (41), the hole (421) located between the two lugs (43), and the lever (45) including an eccentric end (46) formed to one end thereof, the eccentric end (46) pivotably connected between the two lugs (43) and including a cam portion (46147), the block (47) located in the space (42) and including a convex engaging face (471) which is removably engaged with the groove (32), the block (47) including a push face (472) that is located opposite to the convex engaging face (471).

2. The retractable bicycle cross bar adaptor as claimed in claim 1, wherein the first tube (20) includes a ridge (22) extending axially and inward from an inner periphery of the first connection end (21), the ridge (22) is located corresponding to the groove (32), the collar (41) includes a first flange (412) extending inward from the second end of the passage (411), a protrusion extends from an inner periphery of the first flange (412) and located corresponding to the groove (32) so as to guide the second tube (30) to move linearly, the convex engaging face (471) of the block (47) is removably engaged with the groove (32).

3. The retractable bicycle cross bar adaptor as claimed in claim 1, wherein an end cap (311) is connected to the second connection end (31).

4. The retractable bicycle cross bar adaptor as claimed in claim 1, wherein a pin (452) extends through the two lugs (43) and pivotably connects the eccentric end (46) between the two lugs (43).

5. The retractable bicycle cross bar adaptor as claimed in claim 1, wherein the block (47) is an elongate block and made of rubber, the convex engaging face (471) is shaped to be matched with a shape of the groove (32), the push face (472) is a flat face.

6. The retractable bicycle cross bar adaptor as claimed in claim 2, wherein a second flange (414) extends inward from the inner periphery of the passage (411), the first connection end (21) of the first tube (20) contacts the second flange (414), the space (42) is located between the first and second flanges (412, 414).
